# EUROPEAN PATENT APPLICATION

(11) **EP 4 708 375 A1**
(43) Date of publication of application: **11.03.2026**
(21) Application number: 24903970.2
(22) Date of filing: 01.11.2024
(51) Int. Cl.: H01M 4/131, H01M 4/1391, H01M 4/62, H01M 4/04, H01M 10/052, H01M 10/0562, H01M 4/02

(54) **POSITIVE ELECTRODE, MANUFACTURING METHOD THEREFOR, AND ALL-SOLID-STATE BATTERY COMPRISING SAME**

(30) Priority: 13.12.2023 KR 20230180918
(71) Applicant: LG Energy Solution, Ltd., Seoul 07335 (KR)
(72) Inventor: KIM, Yoonseong, Daejeon 34122 (KR); SHIN, Hwan Ho, Daejeon 34122 (KR); JANG, Daesung, Daejeon 34122 (KR)
(74) Representative: Goddar, Heinz J.
(86) International application number: PCT/KR2024/017013
(87) International publication number: WO 2025/127403

(57) **Abstract**

The present invention relates to a positive electrode, a manufacturing method therefor, and an all-solid-state battery including same, wherein the positive electrode includes a positive electrode active material layer, the positive electrode active material layer includes a positive electrode active material, a sulfide-based solid electrolyte, and a binder, the binder includes a first binder having a weight average molecular weight of 300,000 g/mol or more and a second binder having a weight average molecular weight of 50,000 g/mol or less, and the second binder includes a thiol group. According to the present invention, it is possible to provide: the positive electrode having excellent adhesion between interfaces and/or between components in the positive electrode active material layer as well as excellent dispersibility, and having excellent high-rate discharge efficiency at 1.0C and capacity retention across cycles; a manufacturing method for the positive electrode; and an all-solid-state battery having excellent performance by including the positive electrode.

## Description

### Technical Field

This application claims the benefit of priority on the basis of Korea Patent Application No. 2023-0180918, filed on 12/13/2023, and the entire contents disclosed in the Korean Patent Application are incorporated herein as a reference. This disclosure relates to a positive electrode, a method for preparing the same, and an all-solid-state battery including the same.

### Background Art

There is a soaring demand for secondary batteries exhibiting high energy density and high stability. This surge in demand is prompting efforts to develop technologies for different types of all-solid-state battery electrodes, and in particular, sulfide-based all-solid-state batteries, characterized by high ionic conductivity and theoretically achievable high energy density, are a subject of intense interest.

Unlike typical lithium-ion battery systems, sulfide-based all-solid-state battery systems have no lithium ion conduction through liquid electrolytes induced, and thus, to enhance lithium ion conductivity, sulfide-based solid electrolytes with high ionic conductivity are added in the manufacturing of electrodes.

However, the sulfide-based solid electrolytes are hard to handle, as evidenced by side reactions with polar solvents, and thus have multiple limitations in their use. Therefore, continuous research is needed to provide electrodes and all-solid-state batteries that achieve superior performance while exhibiting improved ionic conductivity and energy density with the sulfide-based solid electrolytes applied to the electrodes.

### Disclosure of Invention

### Technical Goals

The present disclosure is designed to overcome the limitations described above, and thus an aspect provides a positive electrode exhibiting superior dispersibility, superior adhesive strength between interfaces and/or components in a positive electrode active material layer, superior high-rate discharge efficiency at 1.0 coulomb (C), and superior capacity retention over cycles, and a method for preparing the same.

Another aspect provides an all-solid-state battery exhibiting superior performance, including the positive electrode described above.

### Technical solutions

According to an aspect, there is provided a positive electrode including a positive electrode active material layer. The positive electrode active material layer includes a positive electrode active material, a sulfide-based solid electrolyte, and a binder, the binder includes a first binder having a weight average molecular weight of 300,000 grams per mole (g/mol) or greater and a second binder having a weight average molecular weight of 50,000 g/mol or less, and the second binder includes a thiol group.

In an embodiment, a weight ratio of the second binder to the first binder may range from 0.1 to 10.

In an embodiment, the second binder may include 0.05 to 5 weight percent (wt%) of the thiol group.

In an embodiment, the first binder and the second binder may each be at least one selected from the group consisting of styrene-butadiene rubber, acrylated styrene-butadiene rubber, carboxymethyl cellulose, hydroxypropyl cellulose, diacetyl cellulose, polyvinylidene fluoride, polyvinyl chloride, carboxylated polyvinyl chloride, polyvinyl fluoride, polyvinyl pyrrolidone, polytetrafluoroethylene, polyvinylidene, butadiene rubber, styrene-butadiene-styrene rubber, and styrene-panacene-styrene rubber.

In an embodiment, the positive electrode may include 0.1 to 20 parts by weight of the binder with respect to 100 parts by weight of the positive electrode active material.

In an embodiment, the sulfide-based solid electrolyte may be at least one selected from the group consisting of Li₂S-P₂S₅-Li₂O, Li₂S-P₂S₅-Li₂O-LiI, Li₂S-LiBr-LiI-P₂S₅, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-Li₃PO₄, Li₂S-SiS₂- LiₚMO_{q} (p and q are positive numbers, and M is one of P, Si, Ge, B, Al, Ga, and In), Li₂S-SiS₂-P₂S₅-LiI, Li₂S-P₂S₅, Li₂S-P₂S₅-LiX (X is a halogen element), Li₂S-B₂S₃, Li₂S-P₂S₅-ZₘSₙ (m and n are positive numbers, and Z is one of Ge, Zn, or Ga), Li₂S-GeS₂, Li₇₋ₓPS₆₋ₓClₓ (0≤x≤2), Li₇₋ₓPS₆₋ₓBrₓ (0≤x≤2), and Li₇₋ₓPS₆₋ₓIₓ (0≤x≤2).

In an embodiment, the positive electrode active material layer may further include a conductive material.

In an embodiment, the positive electrode active material layer may have a D₉₅ of 15 micrometers (µm) or less, as determined through particle size distribution analysis.

In an embodiment, the positive electrode active material layer may have a D₉₀/D₁₀ of 8 to 12, as determined through particle size distribution analysis.

In an embodiment, the positive electrode active material layer may have a (D₉₀-D₅₀)/(D₅₀-D₁₀) of 0.7 to 1.3, as determined through particle size distribution analysis.

In an embodiment, the positive electrode active material layer may have a (D₉₅-D₁₀)/D₅₀ of 1.8 to 2.4, as determined through particle size distribution analysis.

In an embodiment, the positive electrode may have an adhesive strength of at least 30 gram-force per centimeter (gf/cm).

According to another aspect, there is also provided a method for preparing a positive electrode, including mixing a positive electrode active material, a sulfide-based solid electrolyte, and a binder in a non-polar solvent to prepare a positive electrode slurry, applying the positive electrode slurry onto a positive electrode current collector, and drying. The binder includes a first binder having a weight average molecular weight of 300,000 g/mol or greater and a second binder having a weight average molecular weight of 50,000 g/mol or less, and the second binder includes a thiol group.

In an embodiment, the drying may be performed at a temperature of 70 to 130 degrees Celsius (°C) for 4 to 20 hours in an air atmosphere.

According to another aspect, there is also provided an all-solid-state battery including a positive electrode and a solid electrolyte layer. The positive electrode includes a positive electrode active material layer, the positive electrode active material layer includes a positive electrode active material, a solid electrolyte, and a binder, the binder includes a first binder having a weight average molecular weight of 300,000 g/mol or greater and a second binder having a weight average molecular weight of 50,000 g/mol or less, and the second binder includes a thiol group.

### Effects

According to the disclosure, a positive electrode exhibiting superior dispersibility, superior adhesive strength between interfaces and/or components in a positive electrode active material layer, superior high-rate discharge efficiency at 1.0 coulomb (C), and superior capacity retention over cycles, and a method for preparing the same may be provided. In addition, an all-solid-state battery exhibiting superior performance, including the positive electrode described above, may be provided.

### Brief Description of Drawings

FIG. 1 is a graph showing capacity retention vs. discharge rate for batteries of Example and Comparative Examples.
FIG. 2 is a graph showing capacity retention vs. cycle for batteries of Example and Comparative Examples.

### Best Mode for Carrying Out the Invention

Terms or words used in this specification and claims shall not be interpreted as limited to usual or dictionary meanings, and it shall be interpreted as having meanings and concepts that are consistent with the technical idea of the present disclosure, based on the principle that an inventor may appropriately define the concepts of terms to best explain the disclosure.

Therefore, it is understood that the configuration of an embodiment described in this specification is one of the most desired embodiments of the disclosure and does not represent the entire technical idea of the disclosure, so various equivalents and modification embodiments that can replace the embodiments at the time of filing the present application may exist.

In this specification, singular expressions include plural expressions unless the context clearly indicates otherwise.

In this specification, if a part "includes" a certain element, it means that the part may further include other elements rather than excluding other elements, unless specifically stated to the contrary. Accordingly, for example, a composition including compound A may include compounds other than A. However, in certain embodiments, the term "including" also encompasses more limited meanings of "consisting essentially/inherently of" and "consisting of," and for example, "a composition including compound A" may also consist (essentially/inherently) of compound A.

In connection with this, as used in this specification, it shall be understood that terms such as "being provided with" or "having" are intended to designate the presence of implemented features, numbers, operations, components, or combinations thereof, but not exclude in advance the possibility of the presence or addition of one or more other features, numbers, operations, components, or combinations thereof.

In this specification, if an arbitrary layer is located "on" another arbitrary layer or "between" other arbitrary layers, not only a case where such layer is in contact with another layer, but also a case where another layer or substance exists between the two layers are included.

If amounts, concentrations, or other values or parameters are given as listings of ranges, desirable ranges, desirable upper limits and desirable lower limits in this specification, it is to be understood that all ranges that may be formed from any pair of any upper range limits or desirable values and any lower range limits or desirable values, are specifically disclosed, regardless of whether the range is separately disclosed. If a range of numeric values is referred to in this specification, unless otherwise stated, for example, unless there is a limited term such as greater than and less than, the range is intended to include the endpoint values and all integers and fractions within the range. The scope of the disclosure is not intended to be limited to the specific values referred to when defining a range.

Among the physical properties referred to in this specification, in cases where the measurement temperature affects the relevant physical properties, unless otherwise specified, the physical properties are measured at room temperature. The term, room temperature is a natural temperature that is not heated or reduced, and may indicate, for example, any temperature in a range of about 10 degrees Celsius (°C) to 30°C, about 23°C, or about 25°C. Additionally, unless otherwise specified, the unit of the temperature in this specification is °C.

In addition, among the physical properties referred to in this specification, in cases where the measurement pressure affects the relevant physical properties, unless otherwise specified, the physical properties are measured at normal pressure, that is, atmospheric pressure (about 1 atm).

In this specification, an "all-solid-state battery" may indicate an all-solid-state secondary battery, and may also be referred to as a cell, a secondary battery, or a battery.

An aspect of the present disclosure relates to a positive electrode.

The present disclosure may relate to a positive electrode including a positive electrode active material layer, where the positive electrode active material layer includes a positive electrode active material, a sulfide-based solid electrolyte, and a binder, the binder includes a first binder having a weight average molecular weight of 300,000 grams per mole (g/mol) or greater and a second binder having a weight average molecular weight of 50,000 g/mol or less, and the second binder includes a thiol group.

The sulfide-based solid electrolytes are drawing attention, as characterized by high ionic conductivity and theoretically achievable high energy density. However, when used with polar solvents such as N-methylpyrrolidone (NMP), which are used in a wet process of typical lithium-ion batteries, the sulfide-based solid electrolytes undergo side reactions caused by nucleophilic attacks. Therefore, a solvent-free dry process for preparing a positive electrode active material layer slurry has been suggested. However, the dry process has limitations in sufficiently dispersing particles within the positive electrode active material layer and in forming a positive electrode active material layer having a uniform thickness on a current collector. Therefore, a wet process using a non-polar solvent that causes no side reactions with the sulfide-based solid electrolyte may be considered, but binders soluble in non-polar solvents exhibit insufficient adhesion or cause poor dispersibility with respect to the sulfide-based solid electrolyte. Accordingly, in the positive electrode including a sulfide-based solid electrolyte, a binder that is suitably used in a wet process using a non-polar solvent while improving the dispersibility of the positive electrode active material layer and exhibiting excellent binding strength, interfacial adhesion, and flexibility needs to be introduced.

The disclosure is devised to address these tasks, and particularly, it is found that in a positive electrode, including at least two binders having different properties and combining those binders with other components may resolve the tasks.

The positive electrode active material layer of the disclosure may include, for example, a first binder and a second binder as binders.

In this specification, the term, first binder may also be referred to as a long-chain binder. The first binder, in another example, may have a weight average molecular weight of 320,000 g/mol or greater, 340,000 g/mol or greater, 360,000 g/mol or greater, 380,000 g/mol or greater, 400,000 g/mol or greater, 420,000 g/mol or greater, or 440,000 g/mol or greater, or 2,000,000 g/mol or less, 1,500,000 g/mol or less, 1,000,000 g/mol or less, 800,000 g/mol or less, 600,000 g/mol or less, or 500,000 g/mol or less.

In this specification, the term, second binder may also be referred to as a short-chain binder. The first binder, in another example, may have a weight average molecular weight of 40,000 g/mol or less, 30,000 g/mol or less, 20,000 g/mol or less, or 10,000 g/mol or less, or 3,000 g/mol or greater, 4,000 g/mol or greater, or 5,000 g/mol or greater.

A weight average molecular weight ratio of the second binder to the first binder may be, for example, 25 or greater. The weight average molecular weight ratio of the second binder to the first binder may be, in another example, 30 or greater, 35 or greater, 40 or greater, or 45 or greater, or 1000 or less, 500 or less, 100 or less, or 50 or less.

In the disclosure, the second binder may include, for example, a thiol group. The disclosure may provide a positive electrode exhibiting superior dispersibility and adhesive strength, with the second binder including a thiol group.

A weight ratio of the second binder to the first binder may range from, for example, 0.1 to 10. The weight ratio of the second binder to the first binder may be, in another example, 0.2 or greater, 0.3 or greater, 0.4 or greater, 0.5 or greater, 0.6 or greater, 0.7 or greater, 0.8 or greater, or 0.9 or greater, or 9 or less, 8 or less, 7 or less, 6 or less, 5 or less, 4 or less, 3 or less, or 2 or less. The disclosure may provide a positive electrode exhibiting superior dispersibility and also superior inter-particle and/or interfacial adhesion, with the weight ratio of the second binder to the first binder included in the positive electrode active material layer controlled within the above range.

The second binder may include, for example, 0.05 to 5 weight percent (wt%) of the thiol group. In this specification, the weight percent of the thiol group in the second binder may indicate, for example, a weight ratio of the thiol group included in the second binder to the second binder. The weight percent of the thiol group in the second binder may be, in another example, 0.1 wt% or greater, 0.2 wt% or greater, 0.3 wt% or greater, or 0.4 wt% or greater, or 4 wt% or less, 3 wt% or less, 2 wt% or less, or 1 wt% or less. The disclosure may provide a positive electrode exhibiting superior dispersibility and thus achieving superior high-rate discharge efficiency at 1.0 coulomb (C) and superior capacity retention over cycles, with the weight ratio of the thiol group in the second binder controlled as described above.

The first binder and the second binder may each be at least one selected from the group consisting of, for example, styrene-butadiene rubber, acrylated styrene-butadiene rubber, carboxymethyl cellulose, hydroxypropyl cellulose, diacetyl cellulose, polyvinylidene fluoride, polyvinyl chloride, carboxylated polyvinyl chloride, polyvinyl fluoride, polyvinyl pyrrolidone, polytetrafluoroethylene, polyvinylidene, butadiene rubber, styrene-butadiene-styrene rubber, and styrene-panacene-styrene rubber.

The present disclosure, for example, may relate to a positive electrode including 0.1 to 20 parts by weight of the binder with respect to 100 parts by weight of the positive electrode active material. In another example, the disclosure may include 0.5 parts by weight or greater, or 1 part by weight or greater, or 15 parts by weight or less, or 10 parts by weight or less of the binder, with respect to 100 parts by weight of the positive electrode active material.

The positive electrode active material reversibly absorbs and desorbs lithium ions. The positive electrode active material may be, for example, a lithium transition metal oxide such as a lithium cobalt oxide (LCO), a lithium nickel oxide, a lithium nickel cobalt oxide, a lithium nickel cobalt aluminum oxide (NCA), a lithium nickel cobalt manganate (NCM), a lithium manganate, or a lithium iron phosphate; a nickel sulfide; a copper sulfide; a lithium sulfide; an iron oxide; or a vanadium oxide, but embodiments are not limited thereto, and any material available as a positive electrode active material in the art may be used. The positive electrode active materials may be used alone or in a mixture type of two or more thereof.

The lithium transition metal oxide may be, for example, a compound represented by any one among the formulas of: LiₐA_{1-b}B_{b}D₂ (where 0.90≤a≤1 and 0≤b≤0.5); LiₐNi_{1-b-c}Co_{b}B_{c}O_{2-α}F₂ (where 0.90≤a≤1, 0≤b≤0.5, 0≤c≤0.05, and 0<α<2); LiₐNi_{1-b-c}Mn_{b}B_{c}D_{α} (where 0.90≤a≤1, 0≤b≤0.5, 0≤c≤0.05, and 0≤α≤2); LiₐNi_{1-b-c}Co_{b}B_{c}D_{α} (where 0.90≤a≤1, 0≤b≤0.5, 0≤c≤0.05, and 0<α≤2); LiₐE_{1-b}B_{b}O_{2-c}D_{c} (where 0.90≤a≤1, 0≤b≤0.5, and 0≤c≤0.05); LiE_{2-b}B_{b}O_{4-c}D_{c} (where 0≤b≤0.5 and 0≤c≤0.05); LiₐNi_{1-b-c}Co_{b}B_{c}O_{2-α}F_{α} (where 0.90≤a≤1, 0≤b≤0.5, 0≤c≤0.05, and 0<α<2); LiₐCoG_{b}O₂ (where 0.90≤a≤1 and 0.001≤b≤0.1); LiₐMnG_{d}O₂ (where 0.90≤a≤1 and 0.001≤b≤0.1); LiₐMn₂G_{b}O₄ (where 0.90≤a≤1 and 0.001≤b≤0.1); LiₐNi_{1-b-c}Mn_{b}B_{c}O_{2-α}F_{α} (where 0.90≤a≤1, 0≤b≤0.5, 0≤c≤0.05, and 0<α<2); LiₐNi_{1-b-c}Mn_{b}B_{c}O_{2-α}F₂ (where 0.90≤a≤1, 0≤b≤0.5, 0≤c≤0.05, and 0<α<2); LiₐNi_{b}E_{c}G_{d}O₂ (where 0.90≤a≤1, 0≤ b≤0.9, 0≤c≤0.5, and 0.001≤d≤0.1); LiₐNi_{b}Co_{c}Mn_{d}GeO₂ (where 0.90≤a≤1, 0≤b≤0.9, 0≤c≤0.5, 0≤d≤0.5, and 0.001≤e≤0.1); LiₐNiG_{b}O₂ (where 0.90≤a≤1 and 0.001≤b≤0.1.); QO₂; QS₂; LiQS₂; V₂O₅; LiV₂O₅; LiIO₂; LiNiVO₄; Li_{(3-f)}J₂(PO₄)₃ (0≤f≤2); Li_{(3-f)}Fe₂(PO₄)₃ (0≤f≤2); and LiFePO₄. In those compounds, A may be Ni, Co, Mn, or a combination thereof; B may be Al, Ni, Co, Mn, Cr, Fe, Mg, Sr, V, a rare earth element, or a combination thereof; D may be O, F, S, P, or a combination thereof; E may be Co, Mn, or a combination thereof; F may be F, S, P, or a combination thereof; G may be Al, Cr, Mn, Fe, Mg, La, Ce, Sr, V, or a combination thereof; Q may be Ti, Mo, Mn, or a combination thereof; I may be Cr, V, Fe, Sc, Y, or a combination thereof; and J may be V, Cr, Mn, Co, Ni, Cu, or a combination thereof. A compound having a coating layer added to the surface of the above-described compound may be used as the positive electrode active material, or a mixture of the above-described compound and the compound having a coating layer added thereto may be used. The coating layer added to the surface of the compound may contain, for example, a lithium ion conductive oxide. The lithium ion conductive oxide may include, but is not limited to, LiNbO₃, Li₄Ti₅O₁₂, or Li₃PO₄. The compound forming the coating layer may be amorphous or crystalline. As a method of forming a coating layer, for example, a spray coating method or a dipping method may be considered, but the method may be selected without limitation within a range that does not adversely affect the physical properties of the positive electrode active material.

When the positive electrode active material is, for example, a ternary lithium transition metal oxide including nickel (Ni), such as NCA and NCM, it may be possible to increase the capacity density of the all-solid-state battery and reduce the metal elution of the positive electrode active material under charged conditions. Accordingly, the all-solid-state battery may exhibit improved cycle characteristics under charged conditions.

The shape of the positive electrode active material may be, for example, a particle shape such as a sphere or an elliptical sphere. The particle diameter of the positive electrode active material is not particularly limited, and may be within a range applicable to positive electrode active materials of typical all solid secondary batteries.

The positive electrode active material layer of the disclosure may, for example, include 60 to 90 parts by weight of the positive electrode active material with respect to 100 parts by weight of the positive electrode active material layer, but is not limited thereto, and may include the positive electrode active material within any range applicable to positive electrodes of typical all-solid-state secondary batteries.

The sulfide-based solid electrolyte may be at least one selected from the group consisting of Li₂S-P₂S₅-Li₂O, Li₂S-P₂S₅-Li₂O-LiI, Li₂S-LiBr-LiI-P₂S₅, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-Li₃PO₄, Li₂S-SiS₂- LiₚMO_{q} (p and q are positive numbers, and M is one of P, Si, Ge, B, Al, Ga, and In), Li₂S-SiS₂-P₂S₅-LiI, Li₂S-P₂S₅, Li₂S-P₂S₅-LiX (X is a halogen element), Li₂S-B₂S₃, Li₂S-P₂S₅-ZₘSₙ (m and n are positive numbers, and Z is one of Ge, Zn, or Ga), Li₂S-GeS₂, Li₇₋ₓPS₆₋ₓClₓ (0≤x≤2), Li₇₋ₓPS₆₋ₓBrₓ (0≤x≤2), and Li₇₋ₓPS₆₋ₓIₓ (0≤x≤2).

The sulfide-based solid electrolyte may be prepared by, for example, treating starting materials such as Li₂S and P₂S₅, using a melting rapid cooling method or a mechanical milling method. In addition, after the treatment, heat treatment may be performed. The solid electrolyte may be amorphous, crystalline, or a mixture state thereof. In the present disclosure, the sulfide-based solid electrolyte may include, for example, at least sulfur (S), phosphorus (P), and lithium (Li) as constituent elements among the above-described sulfide-based solid electrolyte materials.

The sulfide-based solid electrolyte may be, for example, an argyrodite-type compound including at least one selected from Li₇₋ₓPS₆₋ₓClₓ (0≤x≤2), Li₇₋ₓPS₆₋ₓBrₓ (0≤x≤2), and Li₇₋ₓPS₆₋ₓIₓ (0≤x≤2). In particular, the sulfide-based solid electrolyte may be an argyrodite-type compound including at least one selected from Li₆PS₅Cl, Li₆PS₅Br, and Li₆PS₅I.

The argyrodite-type solid electrolyte may have a density of, for example, 1.5 to 2.0 grams per cubic centimeter (g/cc). The fact that the argyrodite-type solid electrolyte has a density of 1.5 g/cc or greater may allow the all-solid-state secondary battery to have reduced internal resistance, and effectively suppress the penetration of the solid electrolyte by Li.

The solid electrolyte may have an elastic modulus of, for example, 15 to 35 gigapascals (GPa), but is not limited thereto.

In the disclosure, for example, 10 to 30 parts by weight of the solid electrolyte may be included with respect to 100 parts by weight of the positive electrode active material, but the range is not limited thereto, and the solid electrolyte may be included within any range applicable to positive electrodes of typical all-solid-state secondary batteries.

The positive electrode active material layer may further include, for example, a conductive material. The conductive material included in the positive electrode active material layer may be, for example, graphite, carbon black, acetylene black, Ketjen black, carbon fiber, or metal powder.

The positive electrode active material layer may include, for example, 0.1 to 10 parts by weight of the conductive material with respect to 100 parts by weight of the positive electrode active material, but is not limited thereto, and may include the conductive material within any range applicable to positive electrodes of typical all-solid-state secondary batteries.

In addition, the positive electrode active material layer may further include additives, for example, fillers, coating agents, dispersants, and ion-conductive assistants, and these additives may be used without limitation as long as they are known materials generally used in the electrodes of all-solid-state batteries.

The disclosure may provide a positive electrode exhibiting superior dispersibility through a combination of the components described above.

In an example, the positive electrode active material layer may have a D₉₅ of 15 micrometers (µm) or less, as determined through particle size distribution analysis. The particle size distribution analysis results for the positive electrode active material layer may be determined using a method described in Evaluation Examples below. In another example, the positive electrode active material layer may have a D₉₅ of 14 µm or less, 13 µm or less, 12 µm or less, 11 µm or less, 10 µm or less, or 9 µm or less, or 6 µm or greater, 7 µm or greater, 7.58 µm or greater, 8 µm or greater, or 8.5 µm or greater, as determined through particle size distribution analysis. The positive electrode active material layer of the positive electrode according to the disclosure may exhibit superior dispersibility, controlling agglomeration between particles, thereby reducing coarse particles.

In an example, the positive electrode active material layer may have a D₉₀ of 5 µm to 14 µm, as determined through particle size distribution analysis. In another example, the positive electrode active material layer may have a D₉₀ of 13 µm or less, 12 µm or less, 11 µm or less, 10 µm or less, 9 µm or less, or 8 µm or less, or 5.5 µm or greater, 6 µm or greater, 6.5 µm or greater, or 7 µm or greater, as determined through particle size distribution analysis.

In an example, the positive electrode active material layer may have a D₅₀ of 2 µm to 8 µm, as determined through particle size distribution analysis. In another example, the positive electrode active material layer may have a D₅₀ of 7 µm or less, 6.5 µm or less, 6 µm or less, 5.5 µm or less, 5 µm or less, or 2.5 µm or greater, 3 µm or greater, 3.5 µm or greater, or 4 µm or greater, as determined through particle size distribution analysis.

In an example, the positive electrode active material layer may have a D₁₀ of 2 µm or less, as determined through particle size distribution analysis. In another example, the positive electrode active material layer may have a D₁₀ of 1.8 µm or less, 1.6 µm or less, 1.4 µm or less, 1.2 µm or less, 1 µm or less, or 0.8 µm or less, or 0.1 µm or greater, 0.2 µm or greater, 0.3 µm or greater, 0.4 µm or greater, 0.5 µm or greater, 0.6 µm or greater, or 0.7 µm or greater. The positive electrode active material layer of the positive electrode according to the disclosure may exhibit superior dispersibility, controlling agglomeration between particles.

In an example, the positive electrode active material layer may have a D₉₀/D₁₀ of 8 to 12, as determined through particle size distribution analysis. In another example, the positive electrode active material layer may have a D₉₀/D₁₀ of 9 or greater, or 10 or greater, or 11 or less, as determined through particle size distribution analysis. When D₉₀/D₁₀ satisfies the above range, it is seen that all particles are evenly distributed with no excessive fine or coarse particles contained in the positive electrode active material layer, resulting in high dispersibility.

In an example, the positive electrode active material layer may have a (D₉₀-D₅₀)/(D₅₀-D₁₀) of 0.7 to 1.3, as determined through particle size distribution analysis. In another example, the positive electrode active material layer may have a (D₉₀-D₅₀)/(D₅₀-D₁₀) of 1.25 or less, 1.2 or less, 1.15 or less, or 1.13 or less, or 0.8 or greater, 0.85 or greater, 0.9 or greater, 1 or greater, or 1.1 or greater, as determined through particle size distribution analysis. When (D₉₀-D₅₀)/(D₅₀-D₁₀) satisfies the above range, slurry particle size distribution is narrowly formed around an average particle size in the positive electrode active material layer, indicating that the slurry is stably dispersed.

In an example, the positive electrode active material layer may have a (D₉₅-D₁₀)/D₅₀ of 1.8 to 2.4, as determined through particle size distribution analysis. In another example, the positive electrode active material layer may have a (D₉₅-D₁₀)/D₅₀ of 1.9 or greater or 2 or greater, or 2.3 or less, 2.2 or less, or 2.1 or less. When (D₉₅-D₁₀)/D₅₀ satisfies the above range, slurry particle size distribution is narrowly formed around the specified average particle size in the positive electrode active material layer, indicating that the slurry is stably dispersed.

The positive electrode of the disclosure may further include, for example, a positive electrode current collector. As the positive electrode current collector, a known metal that may be usable as a current collector of an all-solid-state battery may be used. The positive electrode current collector may use, for example, a plate, a mesh, or a foil, composed of copper (Cu), nickel (Ni), aluminum (Al), vanadium (V), gold (Au), platinum (Pt), chromium (Cr), iron (Fe), zinc (Zn), indium (In), germanium (Ge), lithium (Li), magnesium (Mg), stainless steel, titanium (Ti), cobalt (Co), or an alloy thereof. The positive electrode current collector may not be provided in some cases.

The positive electrode of the disclosure may have, for example, an adhesive strength of at least 30 gram-force per centimeter (gf/cm). The adhesive strength of the positive electrode may be measured through a method according to Evaluation Example, which will be described later. In another example embodiment, the positive electrode of the disclosure may have an adhesive strength of 35 gf/cm or more, 40 gf/cm or more, 45 gf/cm or more, 50 gf/cm or more, 55 gf/cm or more, 60 gf/cm or more, 65 gf/cm or more, or 70 gf/cm or more, 150 gf/cm or less, 140 gf/cm or less, 130 gf/cm or less, 120 gf/cm or less, 110 gf/cm or less, 100 gf/cm or less, 90 gf/cm or less, or 80 gf/cm or less.

Another aspect of the present disclosure relates to a method for preparing a positive electrode.

Unless specifically stated otherwise, matters relating to the aspect of the present disclosure may be equally applied to matters relating to another aspect.

The present disclosure may relate to, for example, a method for preparing a positive electrode, including mixing a positive electrode active material, a sulfide-based solid electrolyte, and a binder in a non-polar solvent to prepare a positive electrode slurry, applying the positive electrode slurry onto a positive electrode current collector, and drying, where the binder includes a first binder having a weight average molecular weight of 300,000 g/mol or greater and a second binder having a weight average molecular weight of 50,000 g/mol or less, and the second binder includes a thiol group.

The sulfide-based solid electrolyte undergoes side reactions when combined with a polar solvent, and accordingly, a non-polar solvent needs to be added as a solvent. The non-polar solvent may be, for example, anisole, hexyl butyrate, octyl acetate, butyl butyrate, isobutyl isobutyrate, chloroform, hexane, tetrahydrofuran, toluene, benzene, carbon tetrachloride, carbon disulfide, or turpentine. During the applying and drying processes, a substantial amount or all of the non-polar solvent may evaporate, and therefore, in the positive electrode active material layer of a final positive electrode, it may remain at 1 wt% or less, 0.5 wt% or less, 0.1 wt% or less, or 0.01 wt% or less, or may be completely absent.

The preparing of the positive electrode slurry may further include, for example, adding a conductive material and/or other additives.

The applying of the positive electrode slurry onto the positive electrode current collector may be performed through, but is not limited to, a method such as dip coating, gravure coating, slot-die coating, or doctor blade coating, and any known coating method may be used without limitation.

The drying may be performed, for example, at a temperature of 70 to 130°C in an air atmosphere for 4 to 20 hours. In another example, the drying may be performed at a temperature of 85°C or greater, 90°C or greater, or 95°C or greater, or 125°C or less, 120°C or less, 115°C or less, 110°C or less, or 105°C or less, for 5 hours or greater, 6 hours or greater, or 7 hours or greater, or 19 hours or less, 18 hours or less, 17 hours or less, 16 hours or less, 15 hours or less, 14 hours or less, 13 hours or less, 12 hours or less, 11 hours or less, 10 hours or less, or 9 hours or less, in an air atmosphere.

The other aspect of the present disclosure relates to an all-solid-state battery.

Unless specifically stated otherwise, matters relating to an aspect or another aspect of the present disclosure may be equally applied to matters relating to the other aspect.

The present disclosure may relate to an all-solid-state battery including a positive electrode and a solid electrolyte layer, where the positive electrode includes a positive electrode active material layer, the positive electrode active material layer includes a positive electrode active material, a solid electrolyte, and a binder, the binder includes a first binder having a weight average molecular weight of 300,000 g/mol or greater and a second binder having a weight average molecular weight of 50,000 g/mol or less, and the second binder includes a thiol group.

Matters relating to the all-solid-state battery are not limited to those described below, and any general principles related to lithium-ion secondary batteries or all-solid-state batteries, including the following descriptions, may be applied, provided that they do not hinder the purpose of the disclosure.

The solid electrolyte layer may include, for example, a sulfide-based solid electrolyte, an oxide-based solid electrolyte, or a halide-based solid electrolyte, but is not limited thereto, and may be any electrolyte commonly used in all-solid-state batteries. The sulfide-based solid electrolyte included in the solid electrolyte layer may be, for example, at least one of the examples of the sulfide-based solid electrolyte included in the positive electrode active material layer, and may be the same as or different from the sulfide-based solid electrolyte included in the positive electrode active material layer. The oxide-based solid electrolyte may be, for example, at least any one of a garnet-type solid electrolyte, a Nasicon (Na super ionic conductor)-type solid electrolyte, a LISICON (Li super ionic conductor)-type solid electrolyte, or a perovskite-type solid electrolyte. Particularly, as the oxide-based solid electrolyte, Li₇La₃Zr₂O₁₂, Li₇La₃Zr₂O₁₂ doped with elements such as Al, Y, Ga, Ta, and Nb instead of Li, or Li₇La₃Zr₂O₁₂ multi-doped with Ga⁺³-Sc⁺³ at the element sites of Li, La, and Zr; coated ones thereof, in which the surfaces thereof are coated with materials such as Al₂CO₃, Ge and ZnO; Na₁₊ₓZr₂Si₂P_{3-X}O₁₂ (0≤x≤3), LiM₂(PO₄)₃ (M = Zr, Ti, Ge), Li₁₊ₓAlₓM₂₋ₓ(PO₄)₃ (0<x<2, M=Zr, Ti, Ge), or those doped with atoms having an oxidation number of +3 such as Y, La, and Sc, or doped with atoms having an oxidation number of +2 such as Sr, Mg, and Ca instead of Al; xLi₃AO₄-(1-x) Li₄BO₄ (A: P, As, or V, and B: Si, Ge, or Ti) or those to which Li₃BO₃ or the like is added; or Li₃ₓLa_{2/3-x□1/3- 2x}TiO₃ (lithium lanthanum titanate (LLTO), 0<x<0.16, and □ is vacancy), La_{0.57-2x/3}SrₓLi_{0.3}TiO₃ or the like may be used, without limitation. As the halide-based solid electrolyte, Li₂ZrCl₆, Li₂₊ₓZr₁₋ₓMₓCl₆ (M= Fe, Cr, V), and Na₂ZrCl₆ may be used, but are not limited thereto.

The solid electrolyte may be, for example, in the form of particles. In addition, the solid electrolyte may have an average particle size (D50) of, for example, 0.5 to 2 µm. The solid electrolyte may be used alone or in combination of two or more. When a solid electrolyte layer includes two or more solid electrolytes, the two or more solid electrolytes may be mixed and used in a single layer, or each may be formed into separate layers to create a multilayer structure, or the solid electrolytes may each be mixed with identical or different mixing ratios and formed into separate layers to create a multilayer structure. In this specification, the average particle size (D50) may indicate a diameter at which the cumulative volume of particles reaches half (50%) of the total volume when the particles are arranged in ascending order of particle size as measured through laser diffraction scattering particle size distribution.

The solid electrolyte layer may further include, for example, a binder. As the binder, for example, an aqueous binder, an organic binder, or a combination thereof may be used. The binder may be, for example, polyvinyl alcohol, carboxymethyl cellulose, hydroxypropyl cellulose, diacetyl cellulose, polyvinylidene fluoride, polyvinyl chloride, carboxylated polyvinyl chloride, polyvinyl fluoride, a polymer including ethylene oxide, polyvinyl pyrrolidone, polyurethane, polytetrafluoroethylene, polyvinylidene fluoride, polyethylene, polypropylene, styrene-butadiene rubber, acrylated styrene-butadiene rubber, an epoxy resin, nylon, or a combination thereof. As the aqueous binder, for example, styrene butadiene rubber, carboxymethyl cellulose, or a combination thereof may be used. The organic binder may be, for example, polytetrafluoroethylene, polyvinylidene fluoride, or a combination thereof, but is not limited thereto, and any known binder may be used without limitation as long as it does not hinder the purpose of the disclosure. The solid electrolyte layer may include, for example, 5 wt% or less of the binder.

The thickness of the solid electrolyte layer is not particularly limited, but may typically range from 0.1 µm to 1 millimeter (mm).

The all-solid-state battery of the disclosure may further include a negative electrode.

The negative electrode may, in one example, include a negative electrode active material layer. The negative electrode active material layer may include, for example, a negative electrode active material, and may optionally further include a solid electrolyte, a conductive material, and/or a binder.

The negative electrode active material may be, for example, lithium, a lithium alloy, carbon, silicon, a silicon alloy, or Li₄Ti₅O₁₂(LTO), or may be selected from an alloy of lithium, a lithium alloy, carbon, silicon, a silicon alloy, or Li₄Ti₅O₁₂(LTO) with at least one metal selected from the group consisting of Sn, Ge, and Al.

The solid electrolyte, conductive material, and/or binder may be included in the types of materials included in the positive electrode or solid electrolyte layer, but are not limited thereto, and any solid electrolyte, conductive material, and/or binder used in the art may be applicable. The solid electrolyte, conductive material, and/or binder included in the negative electrode active material layer may be the same as or different from the solid electrolyte, conductive material, and/or binder included in the positive electrode active material layer or the solid electrolyte layer.

The negative electrode active material layer may also further include, for example, other additives. These additives may be used without limitation as long as they are known materials generally used in electrodes of all-solid-state batteries.

The negative electrode may also further include a negative electrode current collector. The negative electrode current collector may use a known metal that may be usable as a current collector of an all-solid-state battery. The negative electrode current collector may use, for example, a material that does not form an alloy or a compound with lithium. As the negative electrode current collector, for example, a material selected from the group consisting of copper (Cu), nickel (Ni), aluminum (Al), vanadium (V), gold (Au), platinum (Pt), magnesium (Mg), iron (Fe), titanium (Ti), cobalt (Co), chromium (Cr), zinc (Zn), germanium (Ge), indium (In), and stainless steel may be used, but is not limited thereto, and any material used as an electrode current collector in the relevant technical field may be used as long as it does not hinder the purpose of the present disclosure. The negative electrode current collector may be composed of one of the above-described metals, or may be composed of an alloy or a coating material of two or more metals thereof. The negative electrode current collector may be, for example, in the form of a plate, mesh, or foil, but is not limited thereto.

In another example, when the all-solid-state battery uses lithium or a lithium alloy as a negative electrode active material, the negative electrode may include lithium or a lithium alloy as a negative electrode active material layer in the manufacturing of batteries (from an initial manufacturing stage), or may not form a separate negative electrode active material layer in the manufacturing of batteries, but may form a lithium layer during a charging process.

When a separate negative electrode active material layer is not formed in the manufacturing of batteries, the all-solid-state battery of the disclosure may include an anodeless coating layer between a solid electrolyte layer and a negative electrode current collector, or, if a negative electrode current collector is absent, on one side of the anodeless coating layer opposite to a solid electrolyte layer.

In this specification, an "anodeless coating layer" indicates a coating layer formed between a negative electrode current collector and a solid electrolyte layer, or, if a negative electrode current collector is absent, on one side of the solid electrolyte layer, in an all-solid-state battery in which lithium is absorbed into the anodeless coating layer during charging and, after the charge capacity of the anodeless coating layer is exceeded, lithium is deposited between the negative electrode current collector and the anodeless coating layer, or if the negative electrode current collector is absent, on one side of the anodeless coating layer opposite to a solid electrolyte layer, to form a metal layer, and lithium in the anodeless coating layer and a lithium metal layer is ionized and moves toward a positive electrode during discharging. The anodeless coating layer may differ from the above-described negative electrode active material layer in its configuration and operating mechanism. The anodeless coating layer may serve as a protective layer for the lithium metal layer by covering the lithium metal layer during the charging process and may suppress the growth of lithium dendrite precipitation, thereby suppressing the short-circuit and capacity reduction and improving performance of the all-solid-state battery.

The anodeless coating layer may include, for example, amorphous carbon. The amorphous carbon included in the anodeless coating layer may each independently be, for example, at least one selected from the group consisting of carbon black, acetylene black, furnace black, Ketjen black, and graphene, but is not limited thereto, and any amorphous carbon, which may be usable in an anodeless all-solid-state battery, may be used without limitation.

The anodeless coating layer may further include, for example, a lithiophilic element that forms an alloy or a compound with lithium. The lithiophilic element may be, for example, at least one metal selected from the group consisting of gold (Au), platinum (Pt), palladium (Pd), silicon (Si), silver (Ag), aluminum (Al), bismuth (Bi), tin (Sn), and zinc (Zn), a metalloid element, or a combination thereof.

The particle size of the lithiophilic element may be, for example, in a range of 10 to 1000 nanometers (nm). The particle size may indicate a maximum particle size, a minimum particle size, or an average particle size. The particle size of the lithiophilic element may be, in another example embodiment, 20 nm or more, 30 nm or more, 40 nm or more, or 50 nm or more, or 500 nm or less, 400 nm or less, 300 nm or less, 200 nm or less, or 100 nm or less.

The anodeless coating layer may also include, for example, a binder. The binder may be selected from the above-described binders that may be included in the positive electrode active material layer, the solid electrolyte layer, the negative electrode active material layer described above, or, without being limited thereto, any known binder may be used.

A negative electrode current collector may be optionally further included on one surface of the anodeless coating layer, and any of the above-described electrode current collectors may be used without limitation.

When an all-solid-state battery includes the anodeless coating layer, the all-solid-state battery may further include a thin film including an element capable of forming an alloy with lithium, for example. The thin film may be included between the negative electrode current collector and the anodeless coating layer, or, if a negative electrode current collector is absent, on at least one side of both surfaces of the anodeless coating layer. The element capable of forming an alloy with lithium may be, for example, gold, silver, zinc, tin, indium, silicon, aluminum, or bismuth, but is not limited thereto, and any element capable of forming an alloy with lithium in the relevant technical field may be used. The thin film may be composed of one of the above illustrations, or may be composed of various types of alloys. As the all-solid-state battery of the present disclosure further includes the thin film as described above, the all-solid-state battery may have further improved cycle characteristics.

The thin film may have a thickness of, for example, 1 to 800 nm, 10 to 700 nm, 50 to 600 nm, or 100 to 500 nm. The thin film may be formed through, for example, a vacuum deposition method, a sputtering method, or a plating method, but is not limited thereto, and any method capable of forming a thin film in the relevant technical field may be used.

The all-solid-state battery, when including the anodeless coating layer, may further include a metal and/or a metal layer thereof, including lithium or a lithium alloy by charging, for example, between the negative electrode current collector and the anodeless coating layer, on one side of the anodeless coating layer opposite to the solid electrolyte layer, and/or within the anodeless coating layer. The lithium alloy may be, for example, a Li-Al alloy, a Li-Sn alloy, a Li-In alloy, a Li-Ag alloy, a Li-Au alloy, a Li-Zn alloy, a Li-Ge alloy, or a Li-Si alloy, but is not limited thereto, and any lithium alloy used in the relevant technical field may be used. The metal or metal layer, included between the negative electrode current collector and the anodeless coating layer, and/or within the anodeless coating layer may be composed of one of the alloys or lithium, or may be composed of multiple types of alloys.

The thickness of the metal layer including lithium or a lithium alloy may be, for example, in the range of 1 to 1000 micrometers (µm), 1 to 500 µm, 1 to 200 µm, 1 to 150 µm, 1 to 100 µm, or 1 to 50 µm. The thickness is to be controlled as described above so that the metal layer may perform a role as a lithium storage and may improve cycle characteristics.

The metal layer may be formed via precipitation between the negative electrode current collector and the anodeless coating layer, or on the surface opposite to the solid electrolyte layer among both sides of the anodeless coating layer, for example, by charging after assembling the all-solid-state battery. In the case where the metal layer is formed by charging after assembling the all-solid-state battery, the region between the negative electrode current collector and the anodeless coating layer, or on the surface opposite to the solid electrolyte layer among both sides of the anodeless coating layer, may be, for example, a lithium-free region including no lithium in an initial state or after discharge state of the all-solid-state battery.

In an embodiment, the all-solid-state battery according to the disclosure may have a capacity ratio of 87% or more when comparing 1.0 C capacity to 0.1 C capacity. The high-rate discharge efficiency may be measured through a method according to Evaluation Example below. In another example, the all-solid-state battery of the disclosure may have a capacity ratio of 1.0 C capacity to 0.1 C capacity of 88% or greater, 89% or greater, 90% or greater, 91% or greater, 92% or greater, 93% or greater, or 94% or greater, or 99.9% or less, 99% or less, or 95% or less. The all-solid-state battery of the disclosure may exhibit superior dispersibility in a positive electrode, and superior high-rate discharge efficiency resulting from the control of solid electrolyte agglomeration.

In an embodiment, the all-solid-state battery according to the disclosure may have a capacity retention of 90% or greater over cycles. The capacity retention over cycles is measured through a method according to Evaluation Example below, and may indicate capacity retention after 120 cycles. The capacity retention after 120 cycles may indicate, for example, the percentage of the capacity at the 120th cycles to the capacity at the 1st cycle. In another embodiment, the all-solid-state battery according to the disclosure may have a capacity retention of 90.5% or greater, 91% or greater, 91.5% or greater, 92% or greater, 92.5% or greater, 93% or greater, or 93.5% or greater, or 99.9% or less, 99% or less, or 95% or less. The all-solid-state battery of the disclosure may exhibit superior capacity retention over cycles due to the excellent adhesion of the positive electrode, which effectively mitigates the expansion and contraction of the positive electrode.

Hereinafter, the present disclosure will be described in detail by way of examples in order to specifically explain the disclosure of the present disclosure as described above and the intended functions and effects of the present disclosure. However, Examples may be modified in various other forms, and the scope of the present specification is not construed as being limited to Examples. It is emphasized that Examples are provided to more specifically explain the present disclosure to those skilled in the art.

### Preparation Example. Preparation of short-chain binder containing thiol group

A "short-chain binder containing a thiol group" including 0.5 weight percent (wt%) of a thiol group in styrene butadien rubber (SBR) having a weight average molecular weight of about 10,000 grams per mole (g/mol) was prepared.

Specifically, 20 grams (g) of styrene and 80 g of 1,3-butadiene were placed in a 1 liter (L) polymerization reactor capable of stirring and heating, and then placed in 180 g of ion-exchange water and stirred. 5 g of sodium stearate was added as an emulsifier and 0.3 g of tertiary dodecyl mercaptan was added as a chain transfer agent. After heating to 50 degrees Celsius (°C) in a nitrogen atmosphere, 0.3 g of potassium persulfate was added as an initiator to initiate a polymerization reaction. The reaction was performed at a constant temperature of 50°C for 10 hours to synthesize a short-chain binder. Thereafter, 5 g of the synthesized binder was stirred in 100 milliliter (mL) of p-xylene and ethanethiol was added such that butadiene and a thiol group were present at a ratio of 50:1. Then, 0.5 g of 2,2'-azoisobutyronitrile (AIBN) as a photoinitiator was added and a thiol-ene click reaction of the binder was induced using UV rays to synthesize a short-chain binder containing a thiol group.

### Example 1. Preparation of positive electrode

A positive electrode active material (LiNi_{0.8}Co_{0.15}Mn_{0.05}O₂ (NCM)), a solid electrolyte (Li₆PS₅Cl, an argyrodite-type crystal), a conductive material (carbon black), and a binder were mixed in a weight ratio of 75-80 : 15-20 : 1-5 : 1-5 in a solvent (anisole, hexyl butyrate, octyl acetate, butyl butyrate, or isobutyl isobutyrate) to prepare a sulfide-based all-solid-state battery composite positive electrode slurry. In this case, the binder was used as a mixture of 'thiol group-containing short-chain binder according to Manufacturing Example' and 'styrene butadien rubber (SBR) having a weight average molecular weight of 450,000 to 500,000 g/mol' in a weight ratio of 1:1.

Thereafter, the positive electrode slurry was applied onto an aluminum foil having a thickness of 300 to 400 micrometers (µm) and then dried at 100°C for 10 to 15 hours in an air atmosphere to obtain a positive electrode including a positive electrode active material layer having a thickness of 200 to 250 µm.

The initial charge capacity (charge capacity at the 1st cycle) of the prepared positive electrode was approximately 20 milliampere-hours (mAh) at 4.25 volts (V) charge, and the weight of the positive electrode was approximately 110 milligrams (mg) (approximately 203 mAh/g per active material weight).

### Comparative Example 1.

A positive electrode was obtained in the same manner as in Example 1, except that 'styrene butadien rubber (SBR) having a weight average molecular weight of 450,000 to 500,000 g/mol' was used alone as a binder.

### Comparative Example 2.

A positive electrode was obtained in the same manner as in Example 1, except that the 'thiol group-containing short-chain binder according to Manufacturing Example' was used alone as a binder.

### Evaluation Example 1. Particle size distribution

### (Slurry sample separation)

A portion of positive electrode slurry of Examples and Comparative Examples was taken and diluted in a xylene solution to prepare an analysis sample.

### (Analysis device)

A particle size analyzer (Mastersizer 3000, Malvem panalytical) was used to conduct particle size analysis of the sample.

Specifically, the analysis samples prepared above were each placed in a sample inlet of the device, and particle size analysis was conducted under the following setting conditions.
⊙ Particle Type : Nickel Oxide NiO
⊙ Material :
   - Material name : Nickel Oxide NiO
   - Refractive index : 2.182
   - Adsorption index : 0.010
⊙ light source :
   - Red light source : Max. 4 milliwatts (mW) He-Ne, 632.8 nanometer (nm)
   - Blue light source : Max. 10 mW LED, 470 nm
⊙ Dispersant :
   - Dispersant name : Xylene
   - Refractive index : 1.430
⊙ Measurement obscuration limits : 9-15%
⊙ Analysis model : Mie scattering

The results of the particle size distribution analysis based on the volume of the positive electrode slurry according to the method above are shown in Table 1 below.

### Evaluation Example 2. Evaluation of adhesive strength

The positive electrodes of Examples and Comparative Examples were cut to a size of 10 centimeters (cm) × 2 cm, and adhered to a slide glass with double-sided tape on a positive electrode active material side, and laminated to prepare samples for peel tests. Then, a 90° peel test was performed on the samples using a UTM machine. The specific analysis conditions were as follows, and the evaluation results are shown in Table 1 below.

### <Analysis conditions>

- Sample width: 20 mm
- Peeling speed: 200 millimeters per minute (mm/min)
- Data valid calculation range: 10 mm - 40 mm

**[Table 1]**

| Item | Example 1 | Comparative Example 1 | Comparative Example 2 |
|---|---|---|---|
| D₁₀ (µm) | 0.76 | 1 | 0.58 |
| D₅₀ (µm) | 4.1 | 5.49 | 3.66 |
| D₉₀ (µm) | 7.8 | 12.4 | 7.05 |
| D₉₅ (µm) | 8.97 | 15.3 | 8.05 |
| D₉₀/D₁₀ | 10.3 | 12.4 | 12.2 |
| (D₉₀-D₅₀)/(D₅₀-D₁₀) | 1.11 | 1.54 | 1.10 |
| (D₉₅-D₁₀)/D₅₀ | 2.00 | 2.60 | 2.04 |
| Adhesive strength (gf/cm) | 71.2 | 74.7 | 20.4 |

### Evaluation Example 3. Evaluation of mono cell performance

An all-solid-state battery, in which a negative electrode current collector (Sus foil), lithium metal, a sulfide-based solid electrolyte film composed of Li₆PS₅Cl, and a positive electrode and a positive electrode current collector (Al foil) according to Examples or Comparative examples were sequentially stacked, was prepared. In this case, a portion of each of the positive electrode current collector and the negative electrode current collector was extended outside the pouch to maintain a vacuum within a battery, and these extended portions were used as positive and negative electrode terminals. In addition, the all-solid-state battery was subjected to a hydraulic treatment at 500 megapascals (MPa) for 30 minutes. By performing this hydrostatic treatment, the characteristics as a battery are greatly improved.

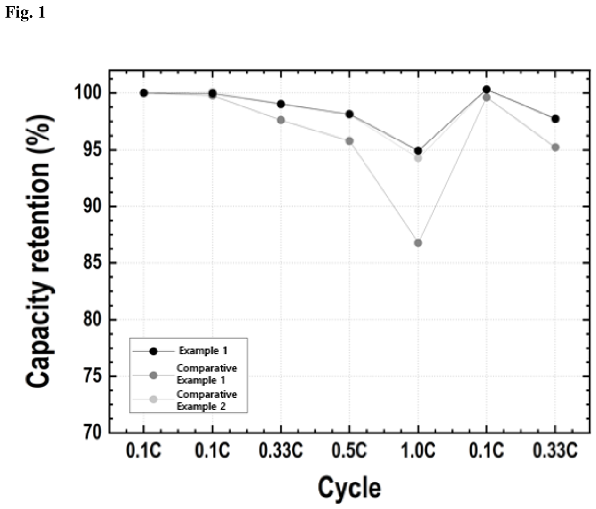

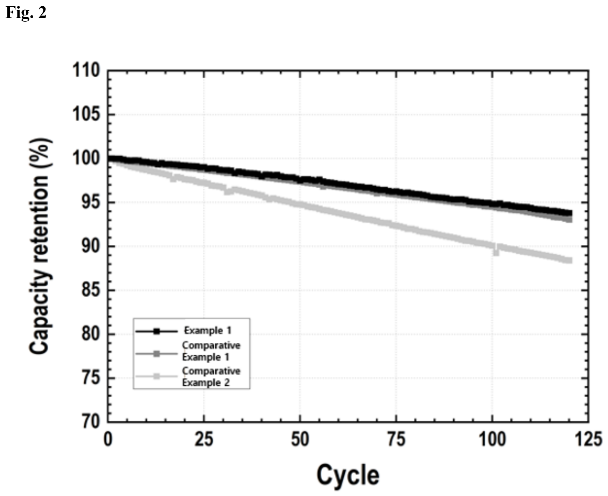

The all-solid-state batteries (pouch-type monocells) including the positive electrodes from either Example 1, Comparative Example 1, or Comparative Example 2 were operated at a voltage range of 4.25 V to 3.0 V and a temperature of 60°C under the following charge-discharge condition 1. The capacity retention at 0.33 coulomb (C), 0.5 C, and 1.0 C were evaluated with respect to a first discharge capacity at 0.1 C, and the results are shown in FIG. 1 and Table 2. In addition, under the above conditions, capacity retention over cycles was evaluated under the following charge/discharge condition 2, and the results are shown in FIG. 2 and Table 2.

### <Charge/Discharge condition 1>

Charge conditions: 0.1 C, 4.25 V constant current (CC)/constant voltage (CV), 0.05 C cut-off
Discharge conditions: 0.1 C for 2 cycles, 0.33 C, 0.5 C or 1.0 C, 3.0 V, CC

### <Charge/Discharge condition 2>

Charge conditions: 0.33 C, 4.25 V CC/CV, 0.05 C cut-off
Discharge conditions: 0.33 C, 3.0 V, CC

**[Table 2]**

| Item | Example 1 | Comparative Example 1 | Comparative Example 2 |
|---|---|---|---|
| Ratio of 1.0 C capacity to 0.1 C capacity (%) | 94.9 | 86.8 | 94.3 |
| Capacity retention over cycles (%) (at 120 cycles) | 93.8 | 93.0 | 88.4 |

Consequently, Comparative Example 1 showed a lower high-rate discharge efficiency of 86.8% at 1.0 C compared to Example 1 (91%), and Comparative Example 2 also exhibited a lower capacity retention of 88.4% after 120 cycles compared to Example 1 (94%). Example 1 demonstrated superior high-rate discharge efficiency and capacity retention over cycles. This is attributed to the excellent dispersion within a positive electrode, enhanced ionic conductivity resulting from the controlled agglomeration of solid electrolyte, and the obtained mechanical properties capable of effectively mitigating the expansion and contraction of the positive electrode during repeated cycles.

## Claims

1. A positive electrode comprising a positive electrode active material layer,
wherein:
the positive electrode active material layer comprises a positive electrode active material, a sulfide-based solid electrolyte, and a binder;
the binder comprises a first binder having a weight average molecular weight of 300,000 grams per mole (g/mol) or greater and a second binder having a weight average molecular weight of 50,000 g/mol or less; and
the second binder comprises a thiol group.

2. The positive electrode according to claim 1, wherein a weight ratio of the second binder to the first binder ranges from 0.1 to 10.

3. The positive electrode according to claim 1, wherein the second binder comprises 0.05 to 5 weight percent (wt%) of the thiol group.

4. The positive electrode according to claim 1, wherein the first binder and the second binder are each at least one selected from the group consisting of styrene-butadiene rubber, acrylated styrene-butadiene rubber, carboxymethyl cellulose, hydroxypropyl cellulose, diacetyl cellulose, polyvinylidene fluoride, polyvinyl chloride, carboxylated polyvinyl chloride, polyvinyl fluoride, polyvinyl pyrrolidone, polytetrafluoroethylene, polyvinylidene, butadiene rubber, styrene-butadiene-styrene rubber, and styrene-panacene-styrene rubber.

5. The positive electrode according to claim 1, comprising 0.1 to 20 parts by weight of the binder with respect to 100 parts by weight of the positive electrode active material.

6. The positive electrode according to claim 1, wherein the sulfide-based solid electrolyte is at least one selected from the group consisting of Li₂S-P₂S₅-Li₂O, Li₂S-P₂S₅-Li₂O-LiI, Li₂S-LiBr-LiI-P₂S₅, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-Li₃PO₄, Li₂S-SiS₂- LiₚMO_{q} (p and q are positive numbers, and M is one of P, Si, Ge, B, Al, Ga, and In), Li₂S-SiS₂-P₂S₅-LiI, Li₂S-P₂S₅, Li₂S-P₂S₅-LiX (X is a halogen element), Li₂S-B₂S₃, Li₂S-P₂S₅-ZₘSₙ (m and n are positive numbers, and Z is one of Ge, Zn, or Ga), Li₂S-GeS₂, Li₇₋ₓPS₆₋ₓClₓ (0≤x≤2), Li₇₋ₓPS₆₋ₓBrₓ (0≤x≤2), and Li₇₋ₓPS₆₋ₓIₓ (0≤x≤2).

7. The positive electrode according to claim 1, wherein the positive electrode active material layer further comprises a conductive material.

8. The positive electrode according to claim 1, wherein the positive electrode active material layer has a D₉₅ of 15 micrometers (µm) or less, as determined through particle size distribution analysis.

9. The positive electrode according to claim 1, wherein the positive electrode active material layer has a D₉₀/D₁₀ of 8 to 12, as determined through particle size distribution analysis.

10. The positive electrode according to claim 1, wherein the positive electrode active material layer has a (D₉₀-D₅₀)/(D₅₀-D₁₀) of 0.7 to 1.3, as determined through particle size distribution analysis.

11. The positive electrode according to claim 1, wherein the positive electrode active material layer has a (D₉₅-D₁₀)/D₅₀ of 1.8 to 2.4, as determined through particle size distribution analysis.

12. The positive electrode according to claim 1, having an adhesive strength of at least 30 gram-force per centimeter (gf/cm).

13. A method for preparing a positive electrode, the method comprising:
mixing a positive electrode active material, a sulfide-based solid electrolyte, and a binder in a non-polar solvent to prepare a positive electrode slurry;
applying the positive electrode slurry onto a positive electrode current collector; and drying,
wherein the binder comprises a first binder having a weight average molecular weight of 300,000 g/mol or greater and a second binder having a weight average molecular weight of 50,000 g/mol or less, and the second binder comprises a thiol group.

14. The method according to claim 13, wherein the drying is performed at a temperature of 70 to 130 degrees Celsius (°C) for 4 to 20 hours in an air atmosphere.

15. An all-solid-state battery comprising a positive electrode and a solid electrolyte layer,
wherein:
the positive electrode comprises a positive electrode active material layer;
the positive electrode active material layer comprises a positive electrode active material, a solid electrolyte, and a binder;
the binder comprises a first binder having a weight average molecular weight of 300,000 g/mol or greater and a second binder having a weight average molecular weight of 50,000 g/mol or less; and
the second binder comprises a thiol group.
